# EUROPÄISCHE PATENTSCHRIFT

(11) **EP 3 465 078 B1**
(45) Veröffentlichungstag und Bekanntmachung des Hinweises auf die Patenterteilung: **25.03.2020**
(21) Anmeldenummer: 17784832.2
(22) Anmeldetag: 24.07.2017
(51) Int. Cl.: G01B 11/16, G01L 1/24, G02B 6/02

(54) **ANSCHWEISSBARER DEHNUNGSSENSOR FÜR GEKRÜMMTE OBERFLÄCHEN**
WELD-ON STRAIN SENSOR FOR CURVED SURFACES
CAPTEUR DE DILATATION SOUDABLE POUR DES SURFACES INCURVÉES

(30) Priorität: 26.09.2016 DE 102016011610
(43) Veröffentlichungstag der Anmeldung: 10.04.2019
(73) Patentinhaber: Hottinger Baldwin Messtechnik GmbH, 64293 Darmstadt (DE)
(72) Erfinder: MAUL, Jochen, 55118 Mainz (DE); KIPP, Tobias, 64283 Darmstadt (DE); GÜNTHER, Bernd, 76185 Karlsruhe (DE); CABRAL BOBIÃO GIRÃO, Maria Marta, 4465-593 Leça do Balio (PT); MOITA ARAÚJO, Francisco Manuel, 4450-296 Matosinhos (PT)
(74) Vertreter: Staudte, Ralph
(86) Internationale Anmeldenummer: PCT/DE2017/000224
(87) Internationale Veröffentlichungsnummer: WO 2018/054404

(56) Entgegenhaltungen:
- EP-A2- 1 148 324
- JP-A- 2000 028 329
- US-A1- 2003 066 356
- US-B2- 7 703 331

## Beschreibung

Die Erfindung betrifft einen anschweißbaren Dehnungssensor und insbesondere einen für gekrümmte Flächen geeigneten anschweißbaren Dehnungssensor.

Dehnungen von Materialoberflächen können z. B. mit Dehnungssensoren gemessen werden, die auf diesen Oberflächen befestigt sind. Wird die Oberfläche gedehnt oder gestaucht, werden dadurch auch die Dehnungssensoren beeinflusst, sodass ein Messsignal erzeugt wird.

Anschweißbare Dehnungssensoren sind aus dem Stand der Technik bekannt. Dazu werden die Dokumente DE 2658324 C2, JP 2000028329 A, JP 2003090772 A, JP 4519703 B2 und JP 5378778 B2 exemplarisch genannt.

In den meisten Fällen werden als Dehnungssensoren sogenannte Dehnungsmessstreifen verwendet, die mittels eines Klebstoffs befestigt werden. Klebstoffe lassen sich gut verarbeiten, haben jedoch auch Eigenschaften, die unter bestimmten Umgebungsbedingungen von Nachteil sein können. Diese ungünstigen Umgebungsbedingungen sind stark schwankende oder hohe Luftfeuchtigkeit und insbesondere große Temperaturdifferenzen. Dazu kommt noch folgendes Problem: Klebstoffe lassen sich nur bei sogenannter Raumtemperatur optimal verarbeiten. Wenn z. B. an Stahlträgern einer Eisenbahnbrücke oder an Erdgasleitungen Dehnungssensoren befestigt werden sollen, dann ist das prinzipiell nicht möglich, wenn die Umgebungstemperatur z. B. unter 0 Grad Celsius liegt. Es ist auch prinzipiell nicht möglich, die Messstelle zu erwärmen, weil dadurch temperaturbedingte Materialdehnungen entstehen, die die Messwerte an dieser Stelle sehr stark verfälschen würden.

Dehnungsmessstreifen bestehen im Wesentlichen aus einem Trägermaterial und dem Dehnungssensor selbst. Der Dehnungssensor ist mit dem Trägermaterial fest verbunden. Trägermaterialien, die mittels Klebstoffen befestigt werden, sind meistens dünne und dadurch sehr flexible Kunststofffolien. Anschweißbare Trägermaterialien sind meistens Stahlbleche, die mittels Punktschweißverbindungen auf der zu untersuchenden Oberfläche befestigt werden.

Ein wichtiger Unterschied zwischen klebbaren Dehnungsmessstreifen und schweißbaren Dehnungssensoren ist die Anzahl der Arbeitsschritte bei der sogenannten Applikation. Die Applikation von Dehnungssensoren muss von Spezialisten vorgenommen werden, weil bereits ein einzelner unsachgemäß ausgeführter Arbeitsschritt zu einem kurz- oder mittelfristigen Ausfall der Messstelle führen kann. Schwer zugängliche Messstellen, wie z. B. an Eisenbahnbrücken oder Erdgasleitungen, erfordern somit einen erheblichen Aufwand bei der Reparatur einer Messstelle. Es ist bekannt, dass mit der Anzahl von Applikationsschritten auch die Fehlerwahrscheinlichkeit steigt. Wenn z. B. für eine Applikation 10 Arbeitsschritte erforderlich sind und nur einer dieser Arbeitsschritte nicht ordnungsgemäß durchgeführt wird, entsteht eine fehlerhafte Applikation, d. h. eine Messstelle mit einem unzulässig hohen Messfehler oder einer hohen Ausfallwahrscheinlichkeit. Wenn für eine Applikation jedoch weniger Arbeitsschritte erforderlich sind, sinkt somit auch die Fehlerwahrscheinlichkeit.

In der Vergangenheit wurden Applikationsstellen meistens noch mit sogenannten Schutzabdeckungen gegen Feuchtigkeit und mechanische Beschädigung versehen. Das Anbringen dieser Schutzabdeckungen wiederum erhöht jedoch die Anzahl der Applikationsschritte und damit auch die Wahrscheinlichkeit von unsachgemäß ausgeführten Applikationsschritten.

Es ist somit wünschenswert, eine Befestigungstechnologie mit einer möglichst geringen Fehlerwahrscheinlichkeit bereitzustellen. Da die Dehnungssensoren bereits bei der Herstellung verkapselt werden, ermöglicht das Anschweißen per se einen geringen Aufwand. Diese Kapseln sind jedoch mechanisch steif und können nicht auf gekrümmten Oberflächen befestigt werden. Eine Lösung des Problems wäre die Herstellung von gekapselten Dehnungssensoren, deren Kapsel bereits den Radius der Werkstückoberfläche aufweist, auf die der Dehnungssensor aufgeschweißt werden soll. Allerdings muss dann für jeden Radius einer Werkstückoberfläche ein spezieller Dehnungssensor gefertigt werden. Daher hat sich diese Technik in der Praxis nicht durchgesetzt.

Die Aufgabe, für einen Dehnungssensor eine zuverlässige Befestigungstechnologie mit einer möglichst geringen Fehlerwahrscheinlichkeit bereitzustellen, die auch bei gekrümmten Oberflächen anwendbar ist, wird mit einem anschweißbaren Dehnungssensor nach Anspruch 1 mit nachfolgenden Merkmalen gelöst:
a. einem Dehnungssensor mit zwei Endabschnitten, die mit Signalleitungen zur Leitung des Messsignals signaltechnisch gekoppelt sind,
b. einem Sensorträger, der sich in Richtung des Dehnungssensors erstreckt und mit diesem fest verbunden ist, wobei der Sensorträger ein mittels Punktschweißen befestigbares Blech ist,
c. einer Schutzabdeckung aus einem festen Kunststoff, die den Dehnungssensor und die Anschlüsse an die Signalleitungen integral umhüllt und die mit dem Sensorträger fest verbunden ist. Im Bereich des Sensors ist die Schutzabdeckung schmal und flach ausgebildet, damit sie beim Befestigen des Sensorträgers an einer gekrümmten Oberfläche nicht bricht. Im Bereich der Koppelstellen der Signalleitungen, d. h. an den Stellen, an denen die Signalleitungen mit dem Dehnungssensor verbunden sind, ist die Schutzabdeckung wenigstens doppelt so breit und wenigstens doppelt so hoch wie im Bereich des Sensors.
d. Die zwei Endabschnitte des Sensorträgers, die nicht mit dem festen Kunststoff umgeben sind, weisen beidseitig Schlitze auf, sodass Zungen ausgebildet sind. Die Enden der paarig angeordneten Zungen sind gegeneinander gerichtet.

Nachfolgend wird die Funktion der Zungen erläutert:
Die Abdeckung ist lediglich im Sensorbereich schmal und flach und dadurch flexibel ausgebildet. Es ist somit möglich, diesen Abschnitt des Sensorträgers an einer gekrümmten Oberfläche eines Rohres, deren Dehnung gemessen werden soll, zu befestigen, ohne dass die Abdeckung an dieser Stelle bricht oder auf den Dehnungssensor einwirkt und dadurch das Messergebnis verfälscht wird. Im Sensorbereich kann die Abdeckung schmal und flach ausgebildet werden, weil der Dehnungssensor selbst dünn ist. An den beiden Enden des Dehnungssensors sind dagegen vergleichsweise dicke Anschlussleitungen befestigt. Damit die Abdeckung des Dehnungssensors auch einen robusten Schutz z. B. vor Schnee und Eis bietet, ist sie aus einem festen Kunststoff ausgeführt. Daher ist die Abdeckung im Bereich der Anschlussleitung viel voluminöser und somit viel starrer als die des Dehnungssensors. Es ist zwingend erforderlich, auch diese starren Endabschnitte des Sensorträgers an der gekrümmten Oberfläche sicher zu befestigen, wobei möglichst wenige zusätzliche Arbeitsschritte erforderlich sein sollen. Mit Hilfe der Zungen wird diese Aufgabe gelöst, denn wenn die Schweißpunkte im Bereich der Zungenenden gesetzt werden, verbiegen sich die Zungen bis auf die Oberfläche. Diese Zungen werden mittels der Schweißelektrode auf die gekrümmte Oberfläche gedrückt und durch Punktschweißen am Zungenende mit dieser verbunden. Somit ist eine sichere Befestigung ohne wesentlichen Mehraufwand möglich, d. h. es sind lediglich einige zusätzliche Schweißpunkte zu setzen.

Je nach Anforderung an die Festigkeit der Schweißverbindung und in Abhängigkeit von der Oberflächenform können die Zungen nach den Ansprüchen 2 bis 4 unterschiedliche Größen und Formen aufweisen.

Gemäß Anspruch 5 sind in den beiden Endabschnitten des Sensorträgers vorzugsweise jeweils 2 bis 5 Zungenpaare angeordnet, wobei die Zungenenden jedes Zungenpaares sich gegenüber liegen. Diese symmetrische Ausführungsform ist besonders für Rohre geeignet.

In einer weiteren Ausbildung nach Anspruch 6 sind die Zungen unterschiedlich lang, wobei die Zungenlänge in Richtung des Dehnungssensors abnimmt, und in der Ausbildung nach Anspruch 7 sind die Zungen unterschiedlich breit, wobei die Zungenbreite in Richtung des Dehnungssensors zunimmt.

Das hat folgenden Vorteil: Das Setzen der Schweißpunkte erfolgt mit einem Punktschweißgerät, das lediglich mit der Hand geführt wird. Der Schweißpunkt wird nur in einem Bereich zwischen Zungenende bis Zungenmitte gesetzt, damit ein möglichst großer Federweg, der von der Zungenlänge bestimmt wird, zur Verfügung steht. Durch Ausbilden unterschiedlich langer oder breiter Zungen kann die Federkraft der gebogenen Zunge trotz unterschiedlicher Deformationen näherungsweise gleich groß gehalten werden.

Nach Anspruch 8 ist der Dehnungssensor ein FBG-Dehnungssensor. Die Erfindung ist für einen optischen Dehnungssensor mit einem Bragg-Gitter besonders geeignet.

Es ist für den Fachmann klar, dass je nach den räumlichen Verhältnissen, die durch den Ort der Messstelle bestimmt werden, der Sensorträger verschiedene Formen aufweisen kann, ebenso können auch die Formen der Zungen innerhalb eines Sensorträgers unterschiedlich sein. Entscheidend für die Umsetzung der technischen Lehre der Erfindung ist, dass die Zungen immer so ausgebildet sind, dass eine Befestigung der starren Endabschnitte der Abdeckung im Bereich der Signalleitungen möglich ist, ohne dass unzulässig hohe Andruckkräfte beim Schweißen erforderlich sind.

Die Erfindung wird nachfolgend an Hand von schematischen Zeichnungen näher erläutert:
- Fig. 1: zeigt in perspektivischer Ansicht einen anschweißbaren Dehnungssensor.
- Fig. 2a - 2c: zeigen Draufsichten des Dehnungssensors mit Schweißpunkten.
- Fig. 3: zeigt in perspektivischer Ansicht einen auf einem Rohr teilweise angeschweißten Dehnungssensor.
- Fig. 4: zeigt die Vorderansicht des auf dem Rohr teilweise angeschweißten Dehnungssensors nach Fig. 3.
- Fig. 5a: zeigt in perspektivischer Ansicht den auf einem Rohr vollständig angeschweißten Dehnungssensor.
- Fig. 5b: zeigt in einer vergrößerten Ansicht unterschiedlich ausgelenkte und auf dem Rohr befestigte Zungen.
- Fig. 6: zeigt Zungen unterschiedlicher Länge.
- Fig. 7: zeigt Zungen unterschiedlicher Breite.

### Bezuaszeichenliste

- 1 -: anschweißbarer Dehnungssensor
- 2 -: FBG-Dehnungssensor
- 3a, 3b -: Signalleitungen
- 4 -: Sensorträger
- 5 -: Schutzabdeckung
- 6 -: Schlitze
- 7 -: Zungen
- 8 -: Schweißpunkte

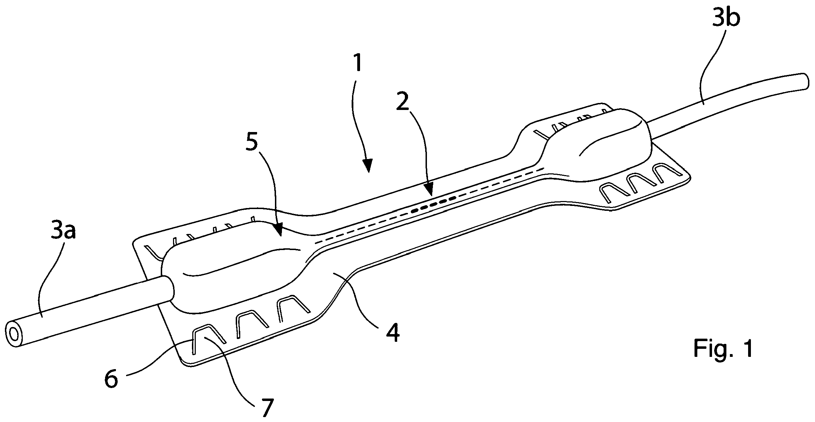

Die Fig. 1 zeigt in perspektivischer Ansicht einen auf gekrümmten Flächen anschweißbaren Dehnungssensor 1. Ein FBG-Dehnungssensor 2 (verdeckt) ist an seinen beiden Endabschnitten mit Signalleitungen 3a, 3b zur Leitung des Messsignals mechanisch fest verbunden und signaltechnisch gekoppelt. Der FBG-Dehnungssensor 2 ist auf einem Sensorträger 4 aus einem Stahlblech aufgeklebt. Das Stahlblech hat bei diesem Ausführungsbeispiel eine Dicke von 0,1 mm und eine Zugfestigkeit von 884 N/mm².

Der FBG-Dehnungssensor 2 und die an diesen angekoppelten Signalleitungen 3a, 3b sind komplett mit einer Schutzabdeckung 5 aus einem festen Kunststoff abgedeckt. Im vorliegenden Ausführungsbeispiel wird Epoxidharz verwendet, da es besonders fest und alterungsbeständig ist. Die Schutzabdeckung 5 ist mit dem Sensorträger 4 fest verbunden. Im Bereich des FBG-Sensors 2 ist die Schutzabdeckung 5 schmal und flach ausgebildet, damit sie weitgehend so flexibel ist wie das dünne Stahlblech des Sensorträgers 4. Die Breite der Schutzabdeckung 5 beträgt in dem vorliegenden Ausführungsbeispiel im Bereich des FBG-Dehnungssensors 2 mm und die Dicke 0,5 mm. Dadurch wird erreicht, dass beim Anschweißen des Sensorträgers 4 an einer gekrümmten Oberfläche die relativ harte Schutzabdeckung 5 nicht bricht. Ebenso ist der Sensorträger 4 in diesem Bereich auch schmaler ausgebildet als an seinen Endabschnitten. Bei dem vorliegenden Ausführungsbeispiel beträgt die Breite der Endabschnitte des Sensorträgers 23 mm, und der Abschnitt dazwischen ist 11 mm breit.

Im Bereich der Koppelstellen, d. h. dort, wo die Signalleitungen 3a, 3b mit den Endabschnitten des FBG-Sensors 2 mechanisch und signaltechnisch verbunden sind, ist die Schutzabdeckung 5 wenigstens doppelt so breit und wenigstens dreimal so hoch wie im Bereich des Dehnungssensors 2. Bei dem vorliegenden Ausführungsbeispiel ist die Schutzabdeckung 5 in diesen Bereichen 10 mm breit, 18 mm lang und 5 mm hoch.

Die freien Flächen der Endabschnitte des Sensorträgers 4 weisen Schlitze 6 auf, so dass Zungen 7 ausgebildet sind, deren Enden sich gegenüberstehen.

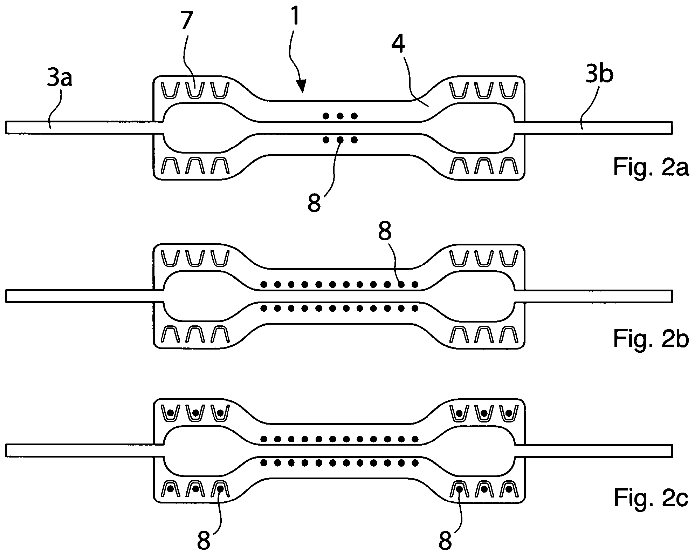

Die Fig. 2a - 2c zeigen Draufsichten des Dehnungssensors und die Reihenfolge beim Setzen von Schweißpunkten 8. Fig. 2a und 2b zeigen, dass die Schweißpunkte 8 beginnend von der Sensormitte aus nach außen gesetzt werden. Anschließend werden die Zungen 7 angeschweißt, was ebenfalls von innen nach außen erfolgt.

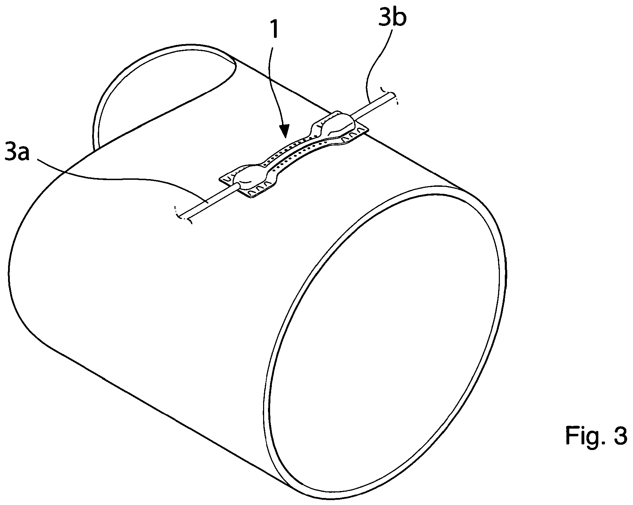

Die Fig. 3 zeigt in perspektivischer Ansicht einen auf einem Rohr teilweise angeschweißten Dehnungssensor 2 gemäß der Darstellung in Fig. 2b. Die Zungen 7 sind noch nicht angeschweißt.

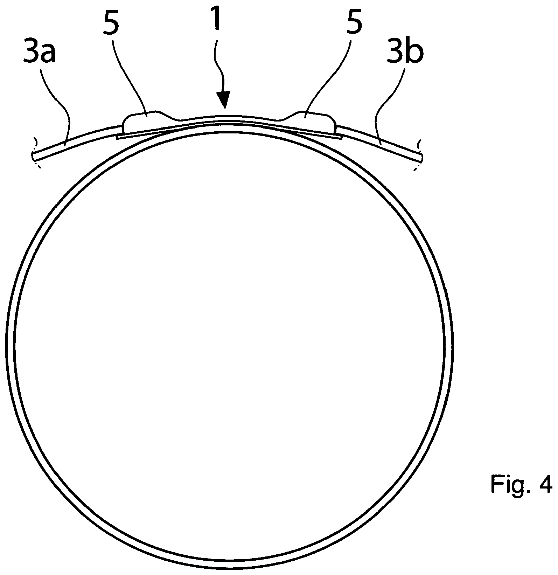

Wie aus Fig. 4 hervorgeht, folgen die dicken und dadurch sehr starren Endabschnitte des Dehnungssensors 1, die Abdeckungen 5 und die Signalleitungen 3a, 3b der Rohrkrümmung nicht.

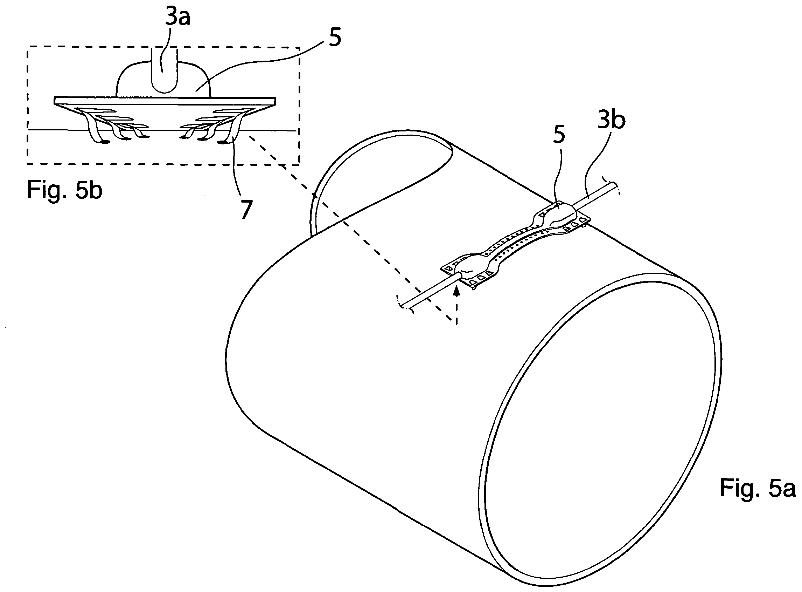

Die Fig. 5a zeigt einen vollständig angeschweißten Dehnungssensor 1. Fig. 5b zeigt in einer vergrößerten Ansicht die Funktion der Zungen 7. Es ist erkennbar, dass die Zungen 7 nach ihrer Befestigung auf der Rohroberfläche unterschiedlich ausgelenkt sind.

Diese Zungen ermöglichen somit eine Befestigung des gesamten Dehnungssensors in einem einzigen Arbeitsgang. Demzufolge ist zum Fixieren der dicken und starren Endabschnitte des Dehnungssensors 1 keine separate Befestigungstechnologie erforderlich. Da der zur Abdeckung verwendete Kunststoff aus der Klasse der Epoxidharze sehr widerstandfähig gegen verschiedene Witterungseinflüsse ist, kann auf eine zusätzliche Abdeckung des Dehnungssensors verzichtet werden, wodurch ebenfalls die Anzahl der Applikationsschritte verringert wird.

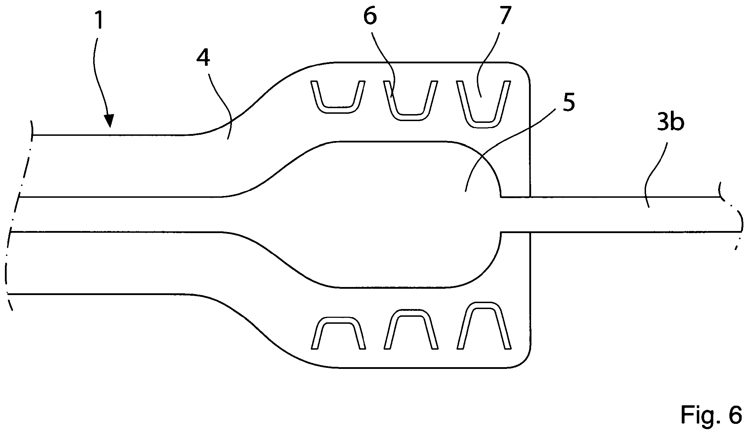

Die Fig. 6 zeigt Zungen 7 unterschiedlicher Länge, wobei die längsten Zungen am Sensorende liegen, da dort der Abstand zur Rohroberfläche am größten ist.

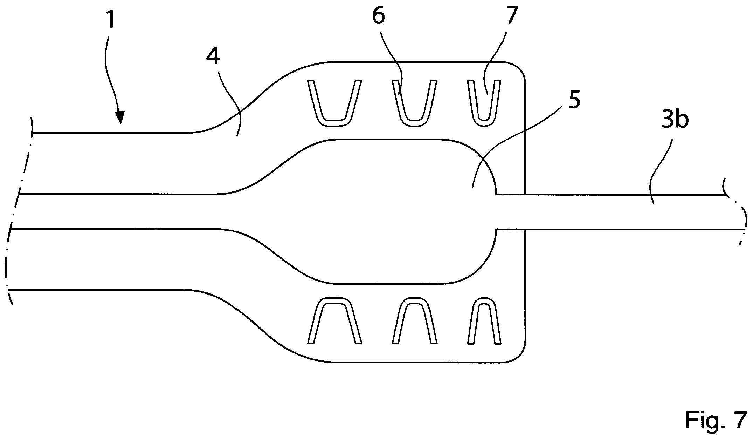

Die Fig. 7 zeigt Zungen 7 unterschiedlicher Breite, wobei die schmalsten Zungen am Sensorende liegen, da dort der Abstand zur Rohroberfläche am größten ist und durch eine schmale Zunge die Deformationskräfte klein gehalten werden können.

Durch unterschiedliche lange oder unterschiedlich breite Zungen in jedem Endabschnitt des Sensorträgers kann die zum Punktschweißen erforderliche Anpresskraft näherungsweise konstant gehalten werden.

## Patentansprüche

1. Anschweißbarer Dehnungssensor (1) mit nachfolgenden Merkmalen:
a. einem Dehnungssensor (2) mit zwei Endabschnitten, die mit Signalleitungen (3a, 3b) zur Leitung des Messsignals signaltechnisch gekoppelt sind,
b. einem Sensorträger (4), der sich in Richtung des Dehnungssensors (2) erstreckt und mit diesem fest verbunden ist, und
c. einer Schutzabdeckung (5) aus einem festen Kunststoff, die den Dehnungssensor (2) und die Endabschnitte der Signalleitungen (3a, 3b) integral umhüllt und mit dem Sensorträger (4) fest verbunden ist, wobei
- die Schutzabdeckung (5) im Bereich des Dehnungssensors (2) schmal und flach ausgebildet ist und im Bereich der Koppelstellen der Signalleitungen (3a, 3b) mit dem Dehnungssensor (2) wenigstens doppelt so breit und wenigstens doppelt so hoch wie im Bereich des Dehnungssensors (2) ist, und
d. die Endabschnitte des Sensorträgers (4) Schlitze (6) aufweisen, sodass Zungen (7) ausgebildet sind, wobei die Zungenenden gegeneinander gerichtet sind.

2. Anschweißbarer Dehnungssensor nach Anspruch 1, wobei die Zungen (7) trapezförmig ausgebildet sind.

3. Anschweißbarer Dehnungssensor nach Anspruch 1, wobei die Zungen (7) rechteckig ausgebildet sind.

4. Anschweißbarer Dehnungssensor nach Anspruch 1, wobei die Zungen (7) halbkreisförmig ausgebildet sind.

5. Anschweißbarer Dehnungssensor nach Anspruch 1, wobei in jedem der beiden Endabschnitte des Sensorträgers (4) beidseitig 2 bis 5 Zungen (7) ausgebildet sind, die sich paarweise gegenüber stehen.

6. Anschweißbarer Dehnungssensor nach Anspruch 5, wobei die Zungen (7) unterschiedlich lang sind und die Zungenlänge in Richtung des Dehnungssensors abnimmt.

7. Anschweißbarer Dehnungssensor nach Anspruch 5, wobei die Zungen (7) unterschiedlich breit sind und die Zungenbreite in Richtung des Dehnungssensors zunimmt.

8. Anschweißbarer Dehnungssensor nach Anspruch 1, wobei der Dehnungssensor (2) eine Glas- oder Kunststofffaser mit einem Bragg-Gitter ist.

## Claims

1. Weldable strain sensor (1) with the following features:
a. a strain sensor (2) having two end portions, which are coupled in signal communication with signal lines (3a, 3b) for conducting the measurement signal,
b. a sensor carrier (4) which extends in the direction of the strain sensor (2) and is firmly connected thereto and
c. a protective cover (5) which is made of a solid plastic and integrally surrounds the strain sensor (2) and the end portions of the signal lines (3a, 3b) and which is firmly connected to the sensor carrier (4), wherein
- the protective cover (5) in the region of the strain sensor (2) is configured narrow and flat and in the region of the coupling points of the signal lines (3a, 3b) with the strain sensor (2) is at least twice as wide and at least twice as high as in the region of the strain sensor (2), and
d. the end portions of the sensor carrier (4) have slots (6), so that tongues (7) are formed, with the tongue ends being directed in opposition to each other.

2. Weldable strain sensor according to claim 1, wherein the tongues (7) are trapezoidal.

3. Weldable strain sensor according to claim 1, wherein the tongues (7) are rectangular.

4. Weldable strain sensor according to claim 1, wherein the tongues (7) are semicircular.

5. Weldable strain sensor according to claim 1, wherein in each of the two end portions of the sensor carrier (4) on both sides 2 to 5 tongues (7) are formed, which oppose each other in pairs.

6. Weldable strain sensor according to claim 5, wherein the tongues (7) vary in length and the tongue length decreases in the direction of the strain sensor.

7. Weldable strain sensor according to claim 5, wherein the tongues (7) vary in widths and the tongue width increases in the direction of the strain sensor.

8. Weldable strain sensor according to claim 1, wherein the strain sensor (2) is a glass or plastic fibre having a Bragg grating.

## Revendications

1. Capteur d'allongement soudable (1) ayant les caractéristiques suivantes:
a. un capteur d'allongement (2) avec deux sections d'extrémité, lesquelles sont couplées du point de vue de la technique de signalisation à des lignes de signal (3a, 3b) servant à conduire le signal de mesure,
b. un support de capteur (4), lequel s'étend dans la direction du capteur d'allongement (2) auquel il est relié fixement, et
c. une enveloppe de protection (5) en plastique solide, laquelle entoure entièrement le capteur d'allongement (2) et les sections d'extrémité des lignes de signal (3a, 3b) et est reliée fixement au support de capteur (4),
- l'enveloppe de protection (5) étant de forme étroite et plate dans la région du capteur d'allongement (2) et étant, dans la région des points de couplage des lignes de signal (3a, 3b) avec le capteur d'allongement (2), au moins deux fois plus large et au moins deux fois plus haute que dans la région du capteur d'allongement (2), et
d. les sections d'extrémité du support de capteur (4) comprennent des encoches (6) quant à former des languettes (7) dont les extrémités sont orientées l'une vers l'autre.

2. Capteur d'allongement soudable selon la revendication 1, dans lequel les languettes (7) sont de forme trapézoïdale.

3. Capteur d'allongement soudable selon la revendication 1, dans lequel les languettes (7) sont de forme rectangulaire.

4. Capteur d'allongement soudable selon la revendication 1, dans lequel les languettes (7) sont de forme semi-circulaire.

5. Capteur d'allongement soudable selon la revendication 1, dans lequel 2 à 5 languettes (7), qui se font face deux à deux, sont formées des deux côtés dans chacune des deux sections d'extrémité du support de capteur (4).

6. Capteur d'allongement soudable selon la revendication 5, dans lequel les languettes (7) ont des longueurs différentes et la longueur de languette diminue en direction du capteur d'allongement.

7. Capteur d'allongement soudable selon la revendication 5, dans lequel les languettes (7) ont des largeurs différentes et la largeur de languette augmente en direction du capteur d'allongement.

8. Capteur d'allongement soudable selon la revendication 1, dans lequel le capteur d'allongement (2) est une fibre de verre ou de plastique avec un réseau de Bragg.
